# EUROPEAN PATENT APPLICATION

(11) **EP 1 883 035 A2**
(43) Date of publication of application: **30.01.2008**
(21) Application number: 07007814.2
(22) Date of filing: 17.04.2007
(51) Int. Cl.: G06F 21/24

(54) **Electronic data disclosure method and system**

(30) Priority: 20.07.2006 JP 2006197565
(71) Applicant: Hitachi, Ltd., Chiyoda-ku Tokyo 100-8280 (JP)
(72) Inventor: Miyazaki, Kunihiko, Chiyoda-ku Tokyo 100-8220 (JP); Hatano, Yasuo, Chiyoda-ku Tokyo 100-8220 (JP); Sakata, Taiki, Chiyoda-ku Tokyo 100-8220 (JP)
(74) Representative: Strehl Schübel-Hopf & Partner

(57) **Abstract**

An electronic data disclosure system including a submitter device, an electronic disclosure device, and a reader device is provided. The submitter device is configured to execute the steps of, creating submission data and transmitting the submission data to the electronic disclosure device. The electronic disclosure device is configured to execute the steps of receiving the submission data from the submitter device, giving a digital signature to the submission data received and disclosing the submission data to which the digital signature has been given. The reader device is configured to execute the steps of obtaining the submission data disclosed by the electronic disclosure device, to which the digital signature has been given, displaying the submission data to which the digital signature has been given, performing signature verification of the submission data to which the digital signature is given and displaying a result of the signature verification.

## Description

### INCORPORATION BY REFERENCE

This application claims priority based on a Japanese patent application, No. 2006-197565 filed on July 20, 2006, the entire contents of which are incorporated herein by reference.

### BACKGROUND OF THE INVENTION

The present invention relates to a technique of disclosing data which is electronically created.

Conventionally, there is a financial statement data disclosure system that is known as a technique of disclosing data which is electronically created (see, for example, "U.S. Securities and Exchange Commission, 'About EDGAR', February 3, 2005 on the Internet <URL: http://www.sec.gov/edgar/aboutedgar.htm>" (hereinafter referred to as Document 1)).

There is also a digital signature (also referred to as "digital signature") technique for assuring authenticity of electronic data such as an electronic document (see, for example, Applied Cryptography: Protocols, Algorithms, and Source Code in C, Second Edition, by Bruce Schneier, John Wiley & Sons, (October 18, 1995), pp. 483 to 502 (hereinafter referred to as Document 2)).

A technique is also known in which a portion, allowed by a signee, of a document which is owned by an owner and to which a signature of a signee different from the owner is given in advance, can be deleted, and in which validity of the document to which the signature is given and from which the portion has been deleted, can be confirmed (see, for example, Content Extraction Signatures, by Ron Steinfeld, Laurence Bull, and Yuliang Zheng, In International Conference on Information Security and Cryptology ICISC 2001, volume 2288 of LNCS, pp. 285 to 304, Berlin, 2001, Springer-Verlag, (2001) (hereinafter referred to as Document 3)). An electronic document authenticity assurance technique is also known that is capable of certifying authenticity of disclosure documents and deletion of information which is inappropriate for disclosure (see, for example, US Patent Application Laid-open No. 2005/0015600, Specification (hereinafter, referred to as Document 4)).

In recent years, various types of social activities have been conducted centered on electronic data, without the use of conventional paper documents. Representative examples of such activities include electronic commerce, electronic distribution, and electronic applications. Along with this, systems for disclosing electronic data are becoming important. One example of such systems includes EDGAR, in which financial reports from companies are electronically received and disclosed (see Document 1). In Japan, a system called EDINET is similarly used.

In the future, it is considered that new types of electronic social activities will become more active based on disclosed data as described above. In the above-mentioned example of the financial reporting data disclosure system, data downloaded from the disclosure system may be presented to a third party. Alternatively, the data downloaded from the disclosure system may be used to make an analysis or the like, and the disclosed data itself or part of the disclosed data synthesized with other disclosed data is cited, to thereby create another document to which extra value is added (e.g., a report for investors).

In using the above-mentioned disclosed data, it is important to make the system such that a reader of the finally configured data (a report for investors in the above-mentioned example) can confirm that the cited disclosed data included in the finally configured data matches the data registered in the disclosure system (that it has not been falsified). According to the conventional disclosure system as disclosed in Document 1, it has been difficult for the reader of the finally configured data to confirm that the data matches the registered data, unless the reader makes an inquiry to the disclosure system.

Therefore, there is a need for an electronic data disclosure method and system which enables the reader to confirm that the received data matches data registered in the disclosure system without making an inquiry to the disclosure system.

As regards the technique for assuring authenticity with respect to electronic data, there has been conventionally known a digital signature technique as disclosed in Document 2. However, according to the digital signature technique, it has been difficult to assure the authenticity of the data unless all the data targeted for signature attaching is included. It has been difficult to confirm the authenticity of data such as a document which has been newly created by citing a part of the data as described above.

Meanwhile, according to the technique disclosed in Document 3 or in Document 4 (hereinafter referred to as "sanitizable signature technique" or "redactable signature technique"), it is possible to confirm the authenticity of disclosed data even when the electronic data is partially disclosed while part of information which is included in the data is undisclosed as being inappropriate to be disclosed. However, Document 3 or Document 4 does not disclose a method of confirming that data, created by citing a part of another data which is synthesized with other disclosed data as described above, matches the data registered in the disclosure system.

Therefore, there is a need for an electronic data disclosure method and system capable of confirming that, when a new document is created by citing a part of the disclosed data or a part of data which is synthesized with other disclosed data, the disclosed data, which is included in a final configuration of the new document thus created, matches the data registered in the disclosure system.

Further, according to the above-mentioned disclosure system, the disclosed data registered may include both a portion available for public inspection and a portion unavailable for public inspection, in which different portions of the disclosed data registered are made available for public inspection depending on the user. For example, an inside reader is allowed to inspect both the portion available for public inspection and the portion unavailable for public inspection, while an outside reader is allowed to inspect only the portion available for public inspection.

Therefore, there is a need for an electronic data disclosure method and system capable of disclosing an appropriate portion of data depending on the privilege of a reader requesting data inspection, in a manner that allows the reader to confirm that the portion of data disclosed matches the data registered in the disclosure system.

### SUMMARY OF THE INVENTION

According to an electronic disclosure system of the present invention, data received from a submitter device and a digital signature given to the received data by the electronic disclosure system are stored. In disclosing the data, the stored data is disclosed together with the digital signature. In this manner, a reader device, in which the data is disclosed, verifies the digital signature, to thereby confirm that the disclosed data matches the data registered in the electronic data disclosure system, without the need of making an inquiry to the electronic disclosure system.

Also, according to the electronic disclosure system of the present invention, data received from the submitter device is given a digital signature of the electronic disclosure system through the sanitizable signature method and stored, while information specifying a reader and a portion available to the reader for inspection is managed. When an inspection request is issued from the reader device, the reader is authenticated, and the authentication result is compared with the information managed in advance, to thereby extract an appropriate portion of the stored data, in which a signature given upon reception of the data is subjected to a sanitizing process based on the sanitizable signature technique. The extracted portion is disclosed with the signature thus sanitized. In this manner, even when different portions of the data are available for inspection depending on the reader, an appropriate portion of the data can be disclosed in accordance with the reader device requesting inspection, in a manner that allows the reader device to confirm that the portion of data thus disclosed matches the data registered in the disclosure system.

Further, according to the electronic disclosure system of the present invention, data received from the submitter device is given the digital signature of the electronic disclosure system through the sanitizable signature method and stored, and the reader device in which the data is disclosed extracts a portion for citing from the data obtained by synthesizing the disclosed data and another disclosed data. The reader device also subjects the signature given to the disclosed data to a sanitizing process based on the sanitizable signature technique. The extracted portion and the signature are synthesized with each other to be embedded into a report to be created. In this manner, even when a new document is created by partially citing the disclosed data or the data obtained by synthesizing the disclosed data with other disclosed data, the data can be disclosed in a manner that allows the reader device to confirm that the disclosed data, which is cited and included in a final configuration of the new document, matches the data registered in the disclosure system.

According to a more specific aspect of the present invention, there is provided an electronic data disclosure system including: a submitter device which is operated by a submitter who is to submit data; an electronic disclosure device which discloses data; and an inspector device which is operated by a reader who is to inspect data, in which: the submitter device is configured to execute the steps of: creating submission data; and transmitting the submission data to the electronic disclosure device; the electronic disclosure device is configured to execute the steps of: receiving the submission data from the submitter device; giving a digital signature to the submission data received; and disclosing the submission data to which the digital signature is given; and the reader device is configured to execute the steps of: obtaining the submission data disclosed by the electronic disclosure device, to which the digital signature is given; displaying the submission data to which the digital signature is given; performing signature verification with respect to the submission data to which the digital signature is given; and displaying a result of the signature verification.

Further, in the above-mentioned electronic data disclosure system, the reader device may be further configured to execute the step of transmitting, to the electronic disclosure device, a request for inspecting the submission data to which the digital signature is given, the electronic disclosure device may be further configured to: store data which specifies a portion available to a reader for inspection; receive the request for inspection from the reader device; and execute the step of authenticating the reader; and the step of disclosing data may further include the steps of: selecting an item of data from among the submission data, based on data which specifies a portion available to the reader for inspection, and the execution result of the step of authenticating the reader; and disclosing the item of data selected.

Further, in the above-mentioned electronic data disclosure system, the digital signature given by the electronic disclosure device may be a digital signature which has been created according to a sanitizable signature technique; the electronic disclosure device may be further configured to execute the step of calculating, from the digital signature created according to the sanitizable signature technique, a digital signature capable of verifying an item of data selected from among the submission data, based on the data, which specifies a portion available to the reader for inspection, and the execution result of the step of authenticating the reader; and the digital signature given to the submission data which is disclosed in the step of disclosing data may be a digital signature capable of verifying the selected item of data.

Further, the above-mentioned electronic data disclosure system may further include a report creator device which receives, from the electronic disclosure device, the submission data to which the digital signature is given, and creates a report based on the submission data thus received to which the digital signature is given, and in the above-mentioned electronic data disclosure system, the digital signature given by the electronic disclosure device may be a digital signature created based on the sanitizable signature technique, the electronic disclosure device may be further configured to execute the step of transmitting, to the report creator device, the submission data to which the digital signature is given, and the report creator device may be configured to execute the steps of: receiving, from the electronic disclosure device, a plurality of items of submission data to which the digital signature is given; creating citation data by synthesizing the plurality of items of data received to which a digital signature is given and citing a part of the data synthesized, or by citing a part of the plurality of items of submission data received to which a digital signature is given and synthesizing the cited items of data; calculating, from the digital signature included in the submission data received to which the digital signature is given, another electronic signature capable of verifying the citation data created by the step of creating citation data; and creating a report which includes the citation data and the digital signature capable of verifying the citation data.

Further, the above-mentioned electronic data disclosure system may further include a report reader device which inspects the report, and in the above-mentioned electronic data disclosure system, the report creator device may be further configured to execute the step of transmitting, to the report reader device, the report created, and the report reader device may be configured to execute the steps of: receiving the report; displaying the report received; verifying the citation data included in the report, by using the digital signature capable of verifying the citation data, the digital signature being included in the report; and displaying the verification result of the citation data.

As described above, according to the present invention, the electronic disclosure device which stores data submitted by a submitter is capable of disclosing an appropriate portion of the data in accordance with a reader, in a manner that allows the reader to confirm that the data thus disclosed matches the data registered in the disclosure system.

Also, a reader inspecting the data thus disclosed is allowed to create new data by citing a part of the disclosed data or a part of data obtained by synthesizing the disclosed data and other disclosed data, in a manner that allows another reader inspecting the new data to confirm that the cited portion of the data included in the new data includes data matching the data registered in the disclosure system.

According to the present invention, the reader is allowed to confirm that received data matches the data registered in the disclosure system, without the need of making an inquiry to the disclosure system.

According to the present invention, a reader is allowed to confirm that, when a document is created by citing a part of the disclosed data or a part of data obtained by synthesizing the disclosed data and other disclosed data, the cited data, that is included in the document, matches the data registered in the disclosure system.

According to the disclosure system of the present invention, an appropriate portion of the data can be disclosed in accordance with the right of a reader, in a manner that allows the reader to confirm that the data thus disclosed matches the data registered in the disclosure system.

These and other benefits are described throughout the present specification. A further understanding of the nature and advantages of the invention may be realized by reference to the remaining portions of the specification and the attached drawings.

### BRIEF DESCRIPTION OF THE DRAWINGS

FIG. 1 is a diagram illustrating a schematic configuration of a network system according to Embodiment 1;
FIG. 2 is a diagram illustrating a schematic configuration of an electronic disclosure device (103) according to Embodiment 1;
FIG. 3 is a flowchart illustrating an outline of an operation of a submitter device (102) for transmitting financial reporting data to the electronic disclosure device (103), according to Embodiment 1;
FIG. 4 is a flowchart illustrating an outline of an operation of the electronic disclosure device (103) for disclosing the financial reporting data received from the submitter device (102), according to Embodiment 1;
FIG. 5 is a flowchart illustrating an outline of an operation of a reader device for inspecting the financial report stored in the electronic disclosure device (103), according to Embodiment 1;
FIG. 6 is a flowchart illustrating an outline of an operation of a report creator device (105) for synthesizing a plurality of items of financial reporting data and creating a report by citing a part of the synthesized items of data, according to Embodiment 1;
FIG. 7 is a flowchart illustrating an outline of an operation of an outside reader device (106) for confirming whether a part, cited from the financial reporting data so as to be included in the report, matches the data stored in the electronic disclosure device (103), according to Embodiment 1;
FIG. 8 is a schematic diagram illustrating the financial reporting data created according to Embodiment 1;
FIG. 9 is a schematic diagram illustrating a portion corresponding to a table cited in the report created according to Embodiment 1;
FIG. 10 is a schematic diagram illustrating a screen image of the report creator device (105) when a report is created according to Embodiment 1; and
FIG. 11 is a schematic diagram illustrating a screen image when the outside reader device (106) displays the report created according to Embodiment 1.

### DETAILED DESCRIPTION OF THE EMBODIMENTS

Hereinafter, a description is given of a disclosure system which discloses financial reporting data as an example. However, the disclosure system of the present invention can similarly be applied to other systems which disclose electronic data different from the financial reporting data.

### Embodiment 1

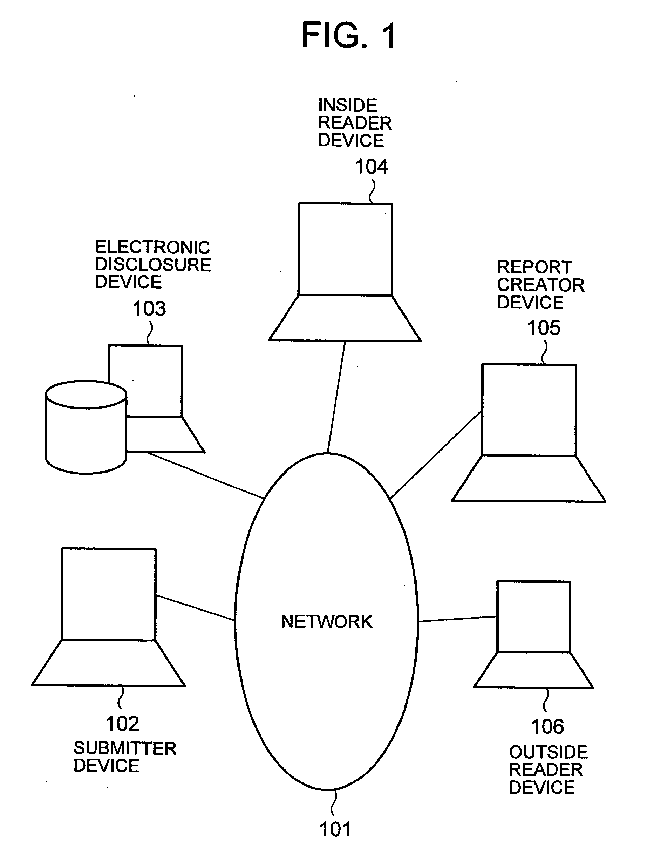

FIG. 1 is a schematic configuration diagram of a system according to an embodiment in which the present invention is applied to an electronic data disclosure system.

As shown in FIG. 1, the system is configured by connecting, through a network 101, a submitter device 102 which is used by a submitter submitting electronic data, an electronic disclosure device 103 which stores the electronic data submitted and discloses the data, an inside reader device 104 which inspects the electronic data stored in the electronic disclosure device 103, a report creator device 105, and an outside reader device 106, to one another. In the system, the inside reader device 104 is generally operated by an organization identical with or having any contractual relationship (including such relations as auditing, supervising, directing, and examining the electronic disclosure device 103) with a management entity of the electronic disclosure device 103, and the inside reader device 104 may be allowed to inspect, in electronic data stored in the electronic disclosure device 103, data which is not available for the report creator device 105 and the outside reader device 106 (data unavailable for public inspection). On the other hand, the report creator device 105 and the outside reader device 106 are generally operated by an organization or an individual different from the management entity of the electronic disclosure device 103, and do not inspect, of the electronic data stored in the electronic disclosure device 103, data unavailable for public inspection. The report creator device 105 further makes an analysis or the like based on the electronic data obtained from the electronic disclosure device 103, cites a part of the disclosed data or a part of data obtained by synthesizing the disclosed data and another disclosed data, and adds an extra value thereto, to thereby create another document (hereinafter, referred to as "report"). The report thus created is sometimes inspected by another device such as the outside reader device 106. Hereinafter, the inside reader device 104, the report creator device 105, and the outside reader device 106 may be collectively referred to as "reader device".

A description is given based on the financial reporting data disclosure system which is explained in Embodiment 1. For example, the submitter device 102 may be used by a company reporting the composition of finances, the electronic disclosure system 103 may receive a report and may be used by a public institution or the like which widely distributes the contents of the report to the public, the inside reader device 104 may be used by an examiner belonging to the public institution, the report creator device 105 may be used by a securities company or the like which makes an analysis or the like based on a plurality of items of the financial data disclosed, synthesizes the plurality of items of the financial data, and cites a part thereof, to thereby create an investment report for general investors (for example, to create a table for comparing profits of respective companies for the current term based on the financial reporting data of a plurality of companies), and the outside reader device 106 may be used by a general investor who inspects the financial data disclosed by the public institution and a report created by a securities company.

According to Embodiment 1, a description is given of a case where the devices exchange data through the network 101. In contrast to this, the data may also be exchanged by, for example, using a portable recording medium such as an FD, a CD-R, or a USB memory. Alternatively, in a case where the size of data to be exchanged is small, data may be exchanged by using a paper medium on which the data is printed. FIG. 1 of Embodiment 1 illustrates an embodiment in which each device is directly connected to the network 101. However, it is more preferable, in terms of security, to provide a firewall device or a demilitarized zone (DMZ) between each device and the network 101 in order to reduce a threat of unlawful computer access and cracking through a network. Instead of providing a firewall for every device, it is also possible to provide a single firewall shared with, for example, the electronic disclosure device 103 and the inside reader device 104 in a case where the electronic disclosure device 103 and the inside reader device 104 are both operated by an identical organization. Employing a single shared firewall as described above has an advantage in terms of, for example, reducing equipment cost and alleviating effort in making settings.

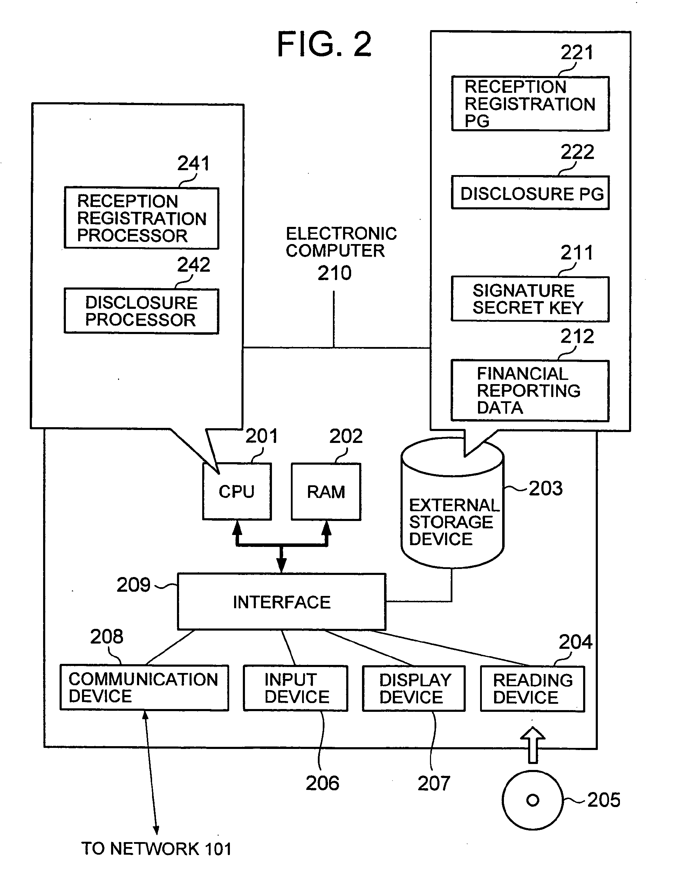

FIG. 2 is a diagram illustrating a schematic configuration of the electronic disclosure device 103 according to Embodiment 1.

The electronic disclosure device 103 may be constructed from an electronic computer 210 having a general configuration, which includes: a CPU 201; a RAM 202 which functions as a work area of the CPU 201; an external storage device 203 such as a hard disk device; a reading device 204 which reads data from a portable storage medium 205 such as a CD-ROM, a DVD-ROM, or an FD; an input device 206 such as a keyboard or a mouse; a display device 207 such as a display; a communication device 208 for performing communication with other devices through a network; and an interface 209 which administers an exchange of data between the above-mentioned constituent elements.

The external storage device 203 of the electronic disclosure device 103 stores a reception registration program (hereinafter, program is referred to as "PG") 221 and a disclosure PG 222. Those programs are loaded onto the RAM 202 and are embodied as processes of a reception registration processor 241 and a disclosure processor 242, respectively, by the CPU 201. In addition, data (such as a signature secret key 211 and financial reporting data 212) output from and input to those processors is stored in the external storage device 203. It is desirable to make the external storage device 203 tamperproof because the external storage device 203 stores the signature secret key 211 which should be managed under particularly strict control in terms of security.

The submitter device 102, the inside reader device 104, the report creator device 105, and the outside reader device 106 each have a configuration similar to that of the electronic disclosure device 103, except in that: the submitter device 102 stores a submission PG in an external storage device thereof; the inside reader device 104 stores an inspection PG in an external storage device thereof; the report creator device 105 stores an inspection PG and a report creating PG in an external storage device thereof; and the outside reader device 106 stores an inspection PG and a report inspection PG in an external storage device thereof.

The following description is made on the assumption that each program is stored in advance in the external storage device 203. However, each program may also be introduced as necessary to the external storage device 203 or the RAM 202, via the reading device 204, through a recording medium such as an FD, a CD-ROM, or a DVD-ROM available to each device, or may be introduced, via the communication device 208, through a network such as the Internet or through a carrier wave or a digital signal propagating the network, which is a communication medium available to each device.

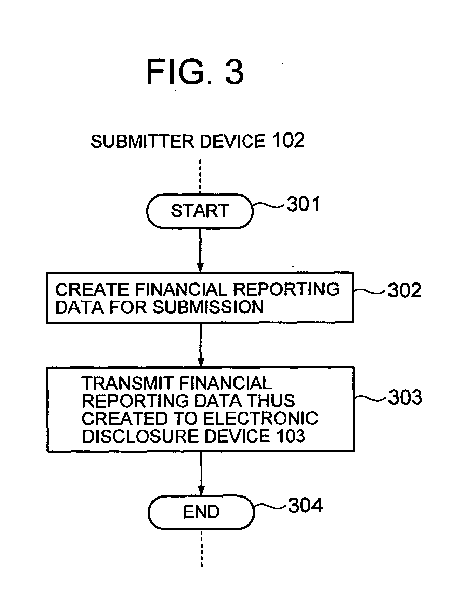

FIG. 3 is a flowchart illustrating an outline of an operation of a submitter device 102 for transmitting financial reporting data to the electronic disclosure device 103 according to Embodiment 1. (Processing performed by the submitter device 102 based on the submission PG)
Step 301: Start.
Step 302: Create financial reporting data for submission.
Step 303: Transmit the financial reporting data thus created to the electronic disclosure device 103.
Step 304: End.

The financial reporting data created in Step 302 is created in accordance with a format commonly defined for the entire system. For example, the financial reporting data may be created in conformity with a format using an extensible markup language (XML) called extensible business reporting language (XBRL). For details of the XBRL, http://www.xbrl.org/ may, for example, be referred to.

Further, it is preferable to give a signature (a digital signature) of the submitter to the financial reporting data created in Step 302. By giving a signature to data as described above, it is easy to indicate that the submitter has certainly confirmed the contents of the financial reporting data to be submitted, as in the case of a handwritten signature or a seal used in a paper document, by executing a signature verifying procedure in the electronic disclosure device 103, which is the reception device. In addition, there is also a merit in that it is easy to confirm that no falsification or the like has been made to the data after the signature is given (e.g., during communication over a network). Specific examples of a digital signature technique include a well known RSA signature, a DSA signature, an ECDSA signature, and a hysteresis signature. It is also possible to use the signature technique disclosed in Document 4.

Prior to the submitter device 102 actually transmitting the financial reporting data to the electronic disclosure device 103 in Step 303, it is preferable that the submitter device 102 and the electronic disclosure device 103 both perform processing to authenticate each other. An advantage of authenticating, by the electronic disclosure device 103, the submitter device 102 or an entity performing submission processing by using the submitter device 102 lies in that it is possible to prevent registration of improper data submitted by a fake submitter. On the other hand, an advantage of authenticating, by the submitter device 102, the electronic disclosure device 103 lies in that it is possible to prevent information leakage from being caused due to masquerading of the electronic disclosure device 103. Examples of a method of authenticating, by the electronic disclosure device 103, the submitter device 102 or the entity performing submission processing by using the submitter device 102 include: a method of inputting an ID and a password registered in advance in the electronic disclosure device 103; a method of inputting biological information of the submission entity; a method of performing authentication processing using a public key certificate of the submitter; and a method of using an IC card or a USB device for authentication. Examples of a method of authenticating, by the submitter device 102, the electronic disclosure device 103 include a method of performing authentication processing using a public key certificate of the electronic disclosure device 103. One of the methods for performing authentication processing using a public key certificate includes a method of using a function of authenticating a secure socket layer (SSL) (or of mutual authentication) in performing communication between the submitter device 102 and the electronic disclosure device 103. It is preferable to perform communication by using the SSL in terms of ensuring the confidentiality, because data flowing through a communication path is encrypted when using the SSL.

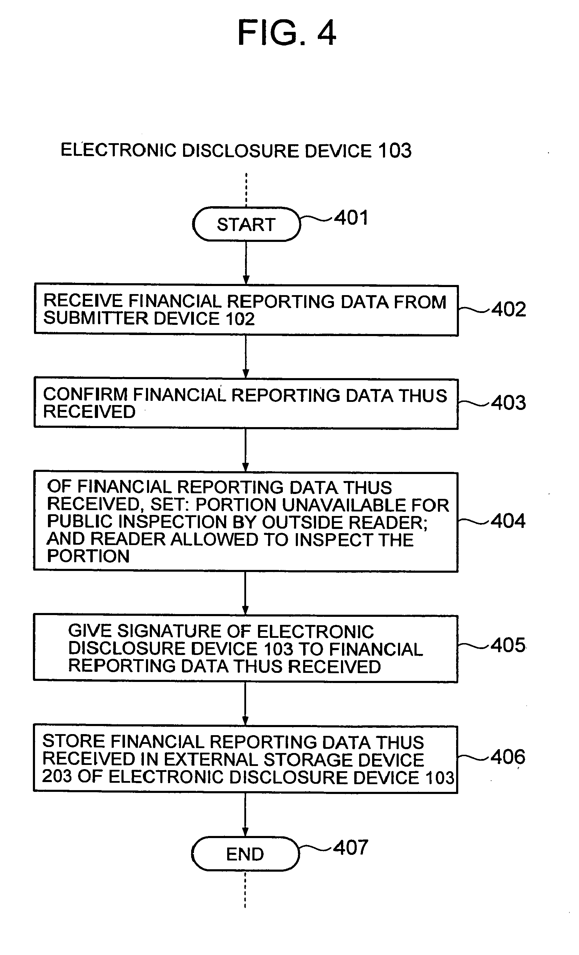

FIG. 4 is a flowchart illustrating an outline of an operation of the electronic disclosure device 103 for disclosing the financial reporting data received from the submitter device 102, according to Embodiment 1. (Processing performed by the electronic disclosure device 103 based on the reception registration PG 221)
Step 401: Start.
Step 402: Receive the financial reporting data from the submitter device 102.
Step 403: Confirm the financial reporting data thus received. Step 404: Set a portion of the financial reporting data thus received unavailable for public inspection by an outside reader, and a reader capable of inspecting the portion.
Step 405: Give a signature of the electronic disclosure device 103 to the financial reporting data thus received.
Step 406: Store the financial reporting data thus received in the external storage device 203 of the electronic disclosure device 103.
Step 407: End.

Examples of the confirmation processing performed in Step 403 include a grammar check of the XBRL (e.g., to confirm whether the data is a well-formed XML document or a valid XML document), checking whether the submission date is appropriate, and checking whether the submitter included in the financial reporting data matches an organization or an entity which has performed the submission processing. In cases where a digital signature of the submitter is given in Step 302, verification processing of the digital signature (including a validation of the public key certificate) is also included in the confirmation processing performed in Step 403. In cases of the financial reporting data described in Embodiment 1, it is desired to disclose the data submitted by a submitter to a reader (including an outside reader) as soon as possible, and therefore the description is given of an exemplary case where the inside reader device 104 does not check the data before the storing process of Step 406. However, unlike these cases, it is also possible to perform checking by using, for example, the inside reader device 104 in performing the confirmation processing of Step 403, so as not to disclose the data in cases where the checking result proves that it is inappropriate to disclose the data. In such cases, the data disclosed by the electronic disclosure device 103 has already been checked by an inside reader.

In setting a portion unavailable for public inspection in Step 404, for example, a predetermined item of the financial reporting data may be set as the portion unavailable for public inspection, or an item notified by the submitter prior to the submission of the financial reporting data, may be set as the portion unavailable for public inspection. The item unavailable for public inspection may be specified and identified by a tag name of the XBRL. As a reader capable of inspecting the portion unavailable for public inspection, an inside reader may be set. The above-mentioned setting information may be recorded and managed by a database program which is activated, for example, on the electronic disclosure device 103. Specific examples of the setting information to be managed may include: a name of the financial reporting data; an identifier uniquely assigned; a name of the submitter; a submission date and time; unavailable-portion specifying information (e.g., a tag name); and an identifier of a reader capable of inspecting a portion unavailable for public inspection. The financial reporting data itself may also be recorded in the database or another database to be managed. Further, a signature given to the financial reporting data in Step 405 may also be recorded in the database or another database to be managed.

The description of Embodiment 1 is made based on cases where an inside reader is capable of inspecting the whole of the financial reporting data including a portion unavailable for public inspection, while an outside reader is capable of inspecting only a part of the data excluding the portion unavailable for public inspection. The present invention is also applicable to cases different from the above-mentioned cases, in which there are a plurality of inside readers or outside readers and different portions of the data are made available for inspection depending on readers. In this case, information to be managed may be appropriately set based on a database or the like. For example, a database or the like may be used to manage data including identifiers of the readers and information specifying a portion available for inspection by each reader identified by each of the reader identifiers (e.g., a tag name).

Embodiment 1 is described based on cases where the sanitizable signature technique disclosed in Document 4 is used as a signature to be given in Step 405. The use of the sanitizable signature makes it possible to confirm that the data extracted for citing in the report created by the report creator device 105 matches the data stored in the electronic disclosure device 103. The processing performed by the report creator device 105 is described later.

The sanitizable signature technique includes a signature creating process, a signature sanitizing process, and a signature verifying process (in addition to those processes, a key creating process is also included as in a general signature technique). Of those processes, the signature sanitizing process is unique to the sanitizable signature technique, and is not performed in the general signature technique. Each of the processes is generally described in the following. Multiple technologies are referred to as sanitizable signature techniques. Hereinbelow, one of the technologies disclosed in Document 4, the entire contents of which is incorporated herein by reference for all purposes, is described as an example. However, the present invention is also applicable to any other case where a sanitizable signature technique different from that disclosed in Document 4 is used.

In the signature creating process, a message M to be given a signature is divided into several blocks (for example, blocks of M_1... M_n). Each of those blocks is a minimum unit that can be sanitized. Next, random numbers (independently of M_i) are generated for each M_i. In the following description, the random numbers are generated as R_1... R_n. Then, by means of a cryptographic hash function h(), H_i = h(M_i l l R_i)(i = 1... n) is calculated. In the expression, arithmetic symbol " l l" indicates concatenation. Finally, with respect to data obtained by concatenating H_1... H_n, a signature value is generated based on a general signature technique (for example, an RSA signature or a DSA signature) by using a signature secret key. Data including the signature value and the random numbers R_1... R_n is set as a signature created according to the sanitizable signature technique, with respect to the message M (= (M_1... M_n)) to be given a signature.

In the signature sanitizing process, from the received message given a signature, a block to be sanitized (in this case, a block M_j) is first selected from among the blocks M_1... M_n. Next, H_j = h(M_j | |R _j) is calculated. Then, M_j is deleted or replaced with data sanitizing M_j to thereby delete R_j. Data including the signature value contained in the received data, the random numbers R_1... R_n (except R_j), and a hash value H_j is set as a signature with respect to the message which has undergone the signature sanitizing process. It should be noted that the signature sanitizing process is performed without the use of a signature secret key.

In the signature verifying process, H_i = h(M_i l l R_i) is first calculated with respect to a block (M_i (i≠ j)) that has not been sanitized. The sanitized block (M_j) does not include information on M_j or R_j, while information on H_j is included in the signed message which has been sanitized. Therefore, the information on H_j can be used to obtain H_1... H_n. Accordingly, the data obtained by concatenating H_1... H_n is verified by following a verification procedure in a general signature technique.

In cases where the financial reporting data does not include a portion unavailable for public inspection and a report creator cites the whole of the financial reporting data disclosed rather than citing only a part of the data, a signature such as an RSA signature, a DSA signature, an ECDSA signature, or a hysteresis signature, other than the sanitizable signature, may also be used. Even in cases of using the sanitizable signature technique, those signature technologies may also be used in combination with the sanitizable signature technique. In cases where it is necessary to certify a submission reception date and time, it is desirable that the data be given a time stamp which is configured based on a digital signature technique and other technologies and is difficult to be falsified. The signatured data may be created based on a format conforming to, for example, a standard called XML signature. In cases of using the sanitizable signature, a transform process which provides a signature creating method or a method of transforming data under the verification process according to the standard of the XML signature, for example, may be designed for the sanitizable signature. As regards the XML signature, refer to, for example, http://www.w3.org/TR/xmldsig-core/ for detail.

The signature affixing process of Step 405 and an outline of the financial reporting data which is given a signature are described later.

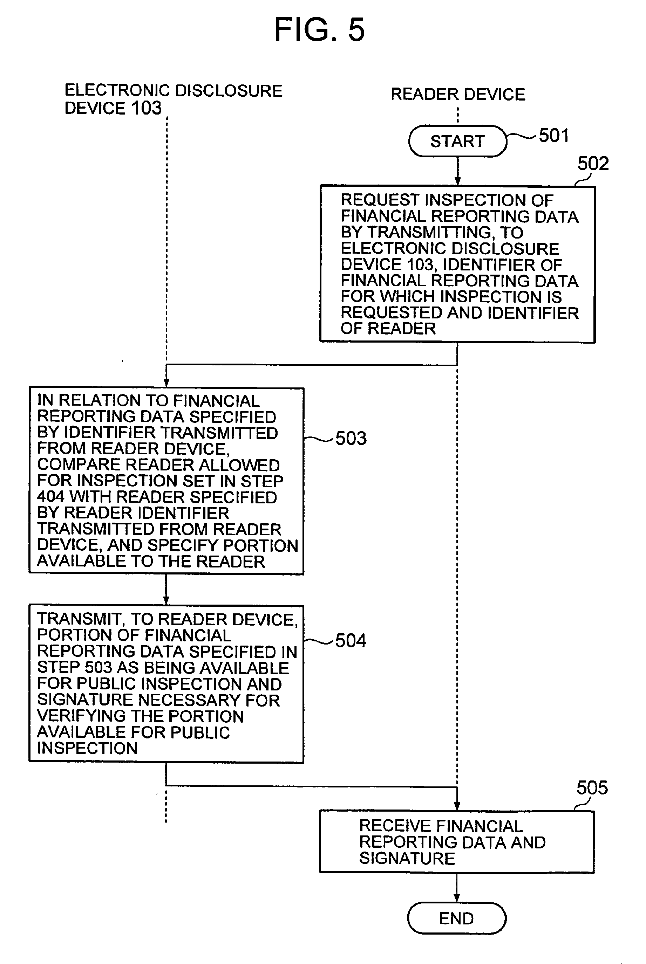

FIG. 5 is a flowchart illustrating an outline of an operation of a reader device (one of the inside reader device 104, the report creator device 105, and the outside reader device 106) for inspecting the financial report stored in the electronic disclosure device 103, according to Embodiment 1. (Processing performed by the reader device based on the inspection PG)
Step 501: Start.
Step 502: Request inspection of the financial reporting data by transmitting, to the electronic disclosure device 103, the identifier of the financial reporting data for which inspection is requested and the identifier of the reader. (Processing performed by the electronic disclosure device 103 based on the disclosure PG 222)
Step 503: In relation to the financial reporting data specified by the identifier transmitted from the reader device, compare the reader who has read permission, set in Step 404 with the reader specified by the reader identifier transmitted from the reader device, and specify a portion available to the reader.
Step 504: Transmit, to the reader device, the portion of the financial reporting data specified in Step 503 as being available for public inspection, and a signature necessary for verifying the portion available for public inspection. (Processing performed by the reader device based on the inspection PG)
Step 505: Receive the financial reporting data and the signature.
Step 506: End.

In order to prevent masquerading of the reader and information leakage from being caused due to the masquerading, it is desirable that the electronic disclosure device 103, prior to receiving data from the reader device, authenticate in advance the reader device or the reader operating the reader device. Examples of a method of performing the authentication include, as described above, a method of confirming the reader by using a password, a method of confirming the reader based on biologic information, a method of confirming the reader by using one of a public key encryption technique and a public key infrastructure (PKI) technique, and a method of confirming the reader by using an authentication device such as an IC card or a USB device. One of those methods may be selected or a plurality of those methods may be combined and selected as an appropriate method, in accordance with costs and a value of the information property (e.g., a portion unavailable for public inspection contained in the financial reporting data) to be protected. Also, the electronic disclosure device 103 may provide an access method for an anonymous reader, with respect to the report creator device 105 and the outside reader device 106, which does not require the authentication process described above. In this case, the reader device may transmit an identifier for the anonymous reader, as an identifier for a reader, transmitted to the electronic disclosure device 103 in Step 502. It may also be possible, when the electronic disclosure device 103 cannot receive the identifier for the reader in Step 503, to consider that an anonymous reader is sending an inspection request. For example, a Web server program is operated on the electronic disclosure device 103 while setting up an access screen which does not require the authentication process with respect to the report creator device 105 and the outside reader device 106. With respect to the inside reader device 104, an access screen may be provided for requesting the authentication process which uses an SSL mutual authentication function or the like.

In order to calculate a signature necessary for verifying a portion available for inspection, the signature being transmitted to the reader device, a process corresponding to the sanitizing process in the sanitizable signature technique, may be performed. It should be noted that this process can be performed without the use of the signature secret key of the electronic disclosure device 103. In other words, the reader device or the like can confirm, through the verification of the signature, that the financial reporting data has not been falsified since a point in time at which the financial reporting data is received by the electronic disclosure device 103, except for the portion unavailable for public inspection. According to the sanitizing process of Embodiment 1, a portion other than the portion available for inspection in the financial reporting data may be deleted, instead of replacing the portion with data corresponding to "black". An advantage of deleting the data lies in the fact that the data size can be reduced. An outline of the sanitizing process according to Embodiment 1 is described later.

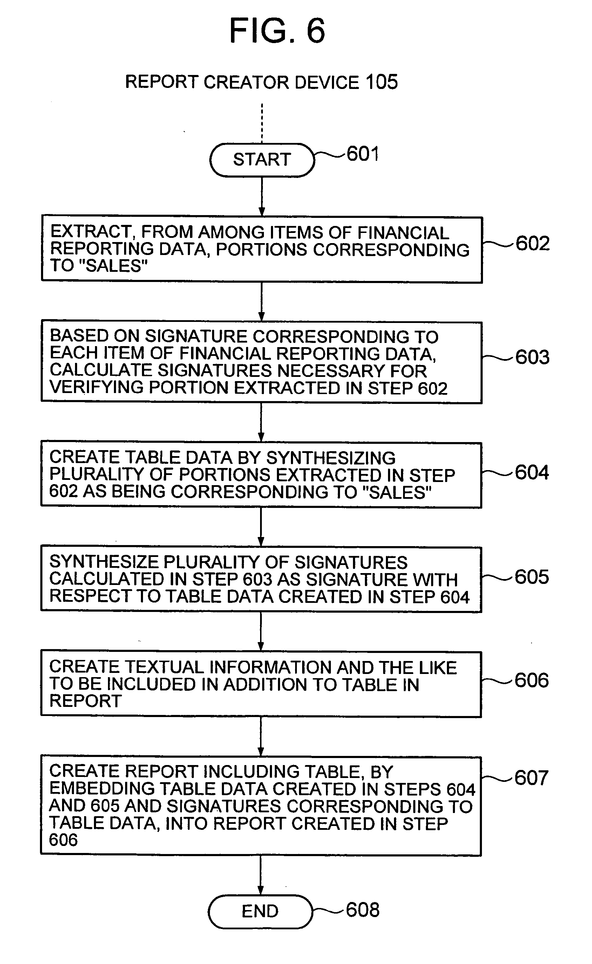

FIG. 6 is a flowchart illustrating an outline of an operation of the report creator device 105, which has already obtained a plurality of financial reporting data according to the flow shown in FIG. 5, for synthesizing the plurality of items of the financial reporting data and creating a report by citing a part of the synthesized items of data (or by synthesizing the items partially cited from the plurality of items of the financial reporting data), according to Embodiment 1.

According to Embodiment 1, a description is given of an example of a specific report where items of sales are cited from each of the plurality of items of the financial reporting data different from one another submitted from submitters (companies) so as to create a table to compare profits of a plurality of companies, and the table is included in a report to investors. However, the applicable range of the present invention is not limited to this, and the present invention can be applied to other examples.

For example, the present invention can also be applied to cases where a plurality of items of the financial reporting data are submitted by the same submitter (company) in different fiscal years, and items regarding "sales" are extracted therefrom for each fiscal year, to thereby create a table which shows a change in profit of the company. Items to be extracted may be automatically decided based on a predetermined rule, or may be designated by a report creator through the input device 206 of the report creator device 105. An example of the case where the items are designated by a report creator is described later. (Processing performed by the report creator device 105 based on the report creation PG)
Step 601: Start.
Step 602: Extract, from among each item of the financial reporting data, portions corresponding to "sales".
Step 603: Calculate signatures, based on a signature corresponding to each item of the financial reporting data, necessary for verifying the portion extracted in Step 602.
Step 604: Create table data by synthesizing the plurality of portions extracted in Step 602 as being corresponding to "sales".
Step 605: Synthesize the plurality of signatures calculated in Step 603 as a signature with respect to the table data created in Step 604.
Step 606: Create textual information and the like to be included in addition to the table in the report.
Step 607: Create a report including the table, by embedding the table data created in Steps 604 and 605 and the signatures corresponding to the table data, into the report created in Step 606.
Step 608: End.

In order to specify the portion corresponding to "sales" in Step 602, a tag name indicating "sales" may be retrieved from the financial reporting data which is an XML file. The report created in Steps 606 and 607 may use, for example, an XML file as a format. In this case, in the process of Step 607 for embedding data, the table data and the signatures corresponding to the table data (hereinafter, collectively referred to as "table data" or the like, which can also be described as an XML file, as described later) may be additionally written into an appropriate portion of the XML file in which textural information or the like is described. Alternatively, rather than additionally writing the table data or the like itself, identification information specifying the table data or the like may be additionally written such that the table data can be referred to based on the identification information. General description of the citation process and synthesizing process according to Embodiment 1 is made hereinbelow.

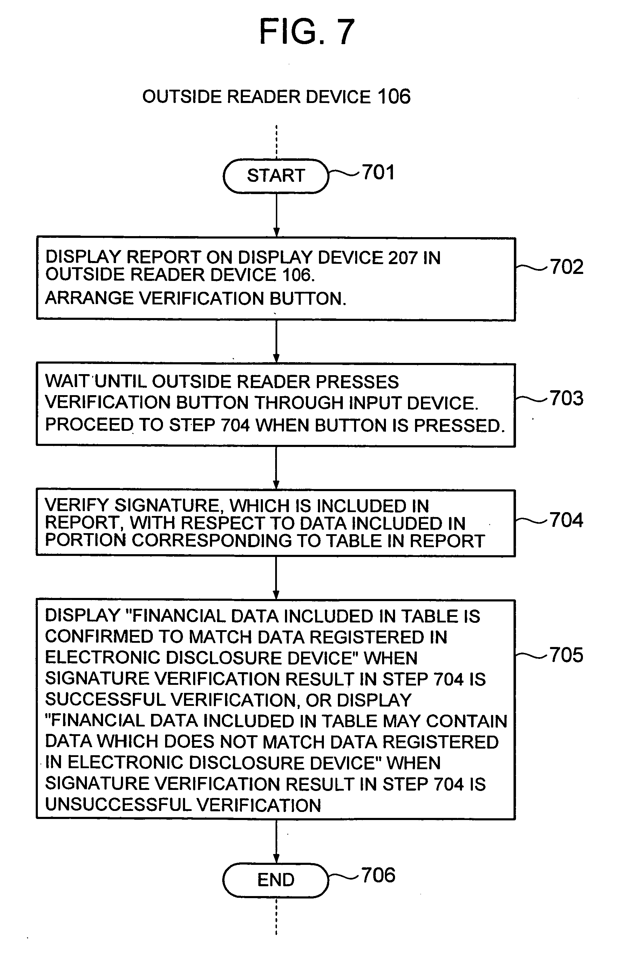

FIG. 7 is a flowchart illustrating an outline of an operation of an outside reader device 106, which has obtained the report created by the report creator device 105 by following the flow shown in FIG. 6, for confirming whether the portion (e.g., a portion corresponding to the table), cited from the financial reporting data to be included in the report, matches the data stored in the electronic disclosure device 103, according to Embodiment 1. The report may be obtained through various methods including, for example, a method in which the report is transmitted through e-mail, a method in which the outside reader device 106 accesses a Web server which is provided internally or externally to the report creator device 105, or a method in which the report is recorded in a medium such as a CD·R and the CD-R is sent by mail. Of those methods, an appropriate method may be selected in consideration of costs and convenience for an outside reader and a report creator. Further, in cases of allowing the report to be disclosed only to a specific outside reader device 106, as in cases of members-only service, an access control mechanism or the like may be employed in the Web server. It is assumed in the following that the outside reader device 106 has already obtained the report in some way. (Processing performed by the outside reader device 106 based on the report inspection PG)
Step 701: Start.
Step 702: Display the report on the display device 207 in the outside reader device 106. In displaying the report, arrange the table in an appropriate position in the textual information, and further arrange a verification button close to (for example, below) the table.
Step 703: Wait until an outside reader presses the verification button through an input device (e.g., a mouse). Proceed to Step 704 when the button is pressed.
Step 704: Verify a signature, which is included in the report, with respect to the data included in a portion corresponding to the table in the report.
Step 705: Display "the financial data included in the table is confirmed to match the data registered in the electronic disclosure device" when the signature verification result of Step 704 proves verification success, or display "the financial data included in the table may contain data which does not match the data registered in the electronic disclosure device" when the signature verification result of Step 704 proves verification failure.
Step 706: End.

In Step 702, in order to display the report on the display device 207, the report which is an XML file may be converted into, for example, an HTML by using XSL transformations (XSLT) and displayed by using a Web browser program on the outside reader device 106. Alternatively, the XML file may be converted into a portable document format (PDF) file and displayed by using a PDF file viewer program on the outside reader device 106. The process of converting the data into various files as described above may be performed by the outside reader device 106. Alternatively, the data may be converted into a file in the report creator device 105 in advance and the file obtained through the conversion may be transmitted to the outside reader device 106.

According to the flow shown in FIG. 7, the signature verification is performed after the verification button is pressed by the outside reader. Unlike this, the signature verification process of Step 704 may be performed prior to displaying the data in Step 702, and in cases where the verification result includes anything but the verification success, the corresponding portion of the table may not be displayed.

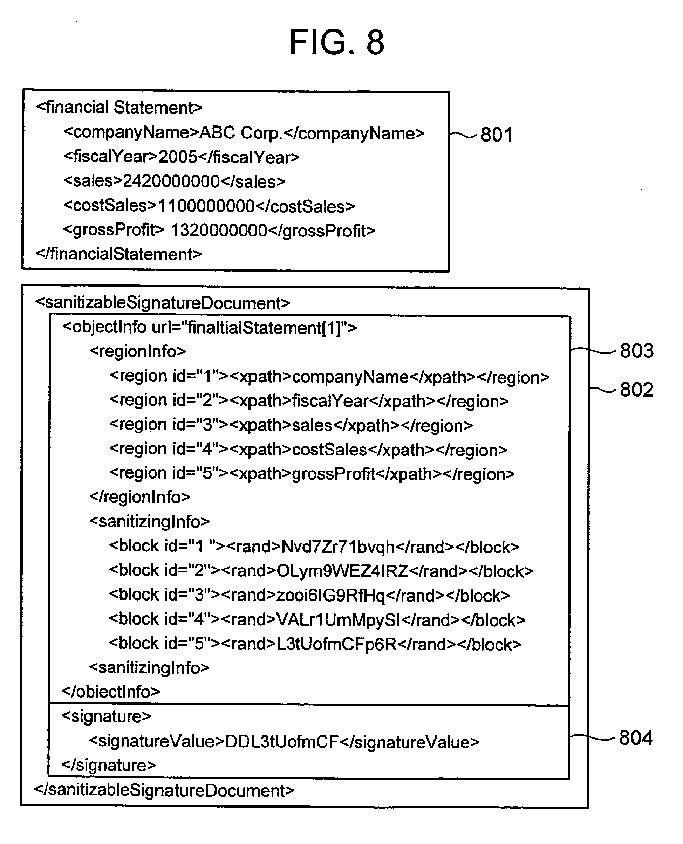

FIG. 8 is a schematic diagram illustrating the financial reporting data created according to Embodiment 1. This data is created based on the financial reporting data 801 given a signature 802. The financial reporting data 801 has originally been created by the submitter device 102, and the signature 802 is given by the electronic disclosure device 103 through the sanitizable signature technique. The signature 802 includes auxiliary data 803 for the sanitizable signature technique and a signature value 804. Although not shown, it is preferable that the signature 802 further include information capable of identifying the signee. For example, the signature 802 may include public key certificate data for verifying the signature. The auxiliary data 803 includes information (regionInfo) for defining a region as a minimum unit that can be sanitized in the financial reporting data and random numbers or the like (sanitizingInfo) which are necessary for obtaining a signature value through the sanitizable signature technique.

A process of giving a signature through the sanitizable signature technique is summarized as follows. There is a plurality of technologies known as the sanitizable signature technique. Hereinbelow, one of the technologies disclosed in Document 4 is described as an example. However, the present invention is also applicable to any other case where a sanitizable signature technique different from that disclosed in Document 4 is used. For example, there may also be used a sanitizable signature technique as disclosed in Document 4, which is capable of prohibiting additional sanitization of the signature.

It is preferable to adopt a sanitizable signature technique capable of prohibiting additional sanitization, as in cases where, for example, the electronic disclosure device 103 discloses data in a manner that prohibits additional sanitization with respect to the data item (e.g., a company name) that must be cited, because the above-mentioned technique does not allow the report creator device 105 to cite any other data item while leaving off the data item that must be cited. In cases of using another sanitizable signature technique as described above, the sanitizable signature technique being different from the technique described in Embodiment 1, a signature format, a procedure, or the like may also be appropriately changed accordingly, depending on the technique to be used. The "regionInfo" information may be defined by analyzing, every time financial reporting data is submitted, the financial reporting data, or may be defined in advance (i.e., before the data is submitted) in cases where the format of the financial reporting data is predetermined. First, the electronic disclosure device 103 divides the financial reporting data 801 which has originally been submitted, based on the "regionInfo" information. The following description is made based on the assumption that the financial reporting data 801 is divided into regions of M_1... M_n each including data (n = 5 in the case of FIG. 8). Next, the electronic disclosure device 103 generates (independently of M_i) random numbers for each M_i. In the following description, the random numbers are generated as R_1... R_n. Then, the electronic disclosure device 103 records R_1... R_n into "sanitizingInfo" included in the auxiliary data 803. The electronic disclosure device 103 then calculates H_i = h(M_i | | R_i) (i = 1... n) by means of a cryptographic hash function h(). In the expression, arithmetic symbol " | | " indicates concatenation. Next, the electronic disclosure device 103 generates a signature value with respect to data obtained by concatenating H_1... H_n, by means of the signature secret key of the electronic disclosure device 103 according to a general signature technique (e.g., an RSA signature or a DSA signature), and records the signature value thus generated as the signature value 804.

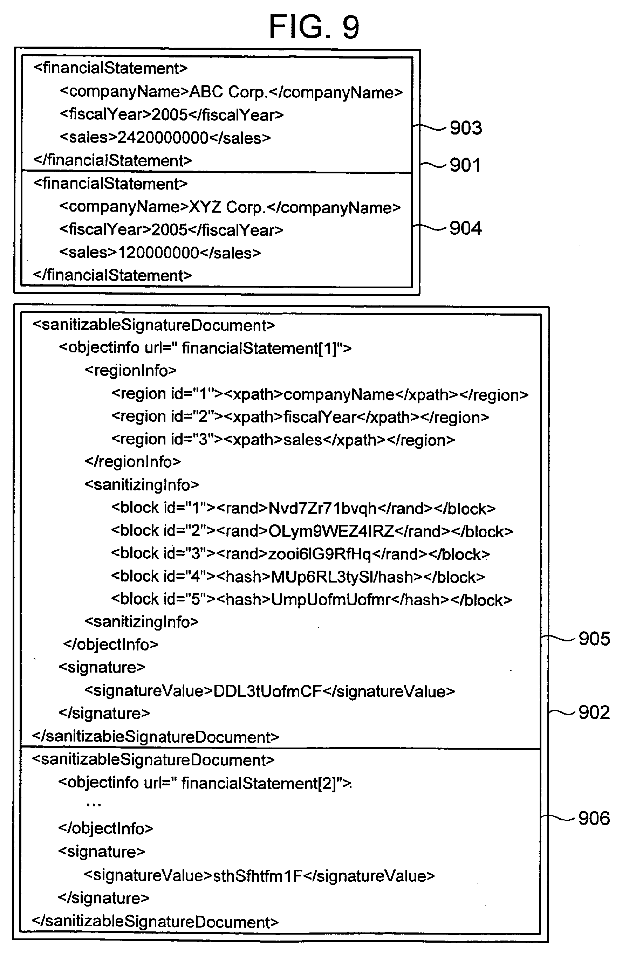

FIG. 9 is a schematic diagram illustrating a portion corresponding to the table cited in the report created according to Embodiment 1. The portion corresponding to the table includes a financial reporting extraction synthesizing portion 901 and a signature synthesizing portion 902. The financial reporting extraction synthesizing portion 901 includes financial reporting extraction portions 903 and 904 corresponding to two companies, namely, ABC Corp. and XYZ Corp., respectively. Also, the signature synthesizing portion 902 includes two signatures 905 and 906 corresponding to ABC Corp. and XYZ Corp., respectively. Although not shown, it is preferable that the signatures 905 and 906 include some information capable of identifying the signees, which is assigned when the signatures were generated. For example, the signatures 905 and 906 may include public key certificate data for verifying the signatures. Note that the financial reporting extraction portion 903 of ABC Corp. and the signature 905 corresponding thereto are constituted of data citing in part the financial reporting data shown in FIG. 8.

In order to make clear the correspondence between the financial reporting extraction portion and the signature, in the example of FIG. 9, an attribute of the "objectInfo" tag of the signature 905 is described as "financialStatement[1]" and an attribute of the "objectInfo" tag of the signature 906 is described as "financialStatement[2]", in the synthesizing process of Step 605. Based on those descriptions, it is understood that the signature 905 corresponds to the financial reporting extraction portion 903 which is described under the first "financialStatement" tag in the same XML file, and that the signature 906 similarly corresponds to the financial reporting extraction portion 904 which is described under the second "financialStatement" tag. According to the description of Embodiment 1, the attribute of the "objectInfo" tag is referred to in order to identify the correspondence between the signatures included in the signature synthesizing portion 902 and the data included in the financial reporting extraction synthesizing portion 901. However, the correspondence may be identified through another method. For example, another tag describing identification information may additionally be provided. If there is information common to a plurality of signatures (in Embodiment 1, the signatures 905 and 906) included in the signature synthesizing portion 902, the information may be compiled. That is, the common information may be described in one of the signatures (e.g., the signature 905), while deleting the common information described in another signature (e.g., the signature 906). In Embodiment 1, a portion framed by a "region" tag is common to all the signatures, and may be deleted from the signature 906. In this manner, there is a merit in that the data size can be reduced.

The process of citing a part of the financial reporting data is performed based on the sanitizing process in the sanitizable signature technique. This process is summarized as follows. In this case, a description is given of the process performed by the report creator device 105 for creating a report (Steps 602 and 603). However, the process performed by the electronic disclosure device 103 for disclosing the financial reporting data including a portion unavailable for public inspection may also follow the same procedure.

Hereinbelow, a description is given of an exemplary case where the report creator device 105 extracts, out of the financial reporting data of ABC Corp. shown in FIG. 8, "companyName", "fiscalYear", and "sales", without citing other items (such as "costSales" and "grossProfit"). The financial reporting data of XYZ Corp. may also be partially cited through the similar process. In the following description, as in the case of creating a signature, items of data included in regions corresponding to "companyName", "fiscalYear", "sales", "costSales", and "grossProfit" are each referred to as M_1... M_5, and random numbers corresponding to the items of data are generated as R_1... R_5. Those items of data are described in the financial reporting data. First, the report creator device 105 calculates, for the items not to be cited, H_i = h(M_i)| |R_i) (i = 4, 5). Next, the report creator device 105 deletes, from the financial reporting data 801, portions not to be cited, to thereby obtain the financial reporting extraction portion 903. Also, the report creator device 105 deletes, from the "regionInfo" portion in the auxiliary data 803, information relating to the portions not to be cited, and substitutes a hash value H_i for random number information (rand) described in the "sanitizingInfo", to thereby obtain the signature 905.

The process performed by the outside reader device 106 for verifying data cited from the financial reporting data (the process of Step 704) is summarized as follows. In the following, a description is given of a procedure of verifying the financial reporting extraction portion 903 of the ABC Corp. and the signature 905. The data of XYZ Corp. can similarly be verified. By referring to the attribute of the "objectInfo" tag of the signature 905, it is possible to identify that the signature 905 corresponds to the financial reporting extraction portion 903 of ABC Corp. (the same goes for the data of XYZ Corp.). The verification success for both of the companies indicates the success of the verification of the data as a whole which is cited and synthesized as shown in FIG. 9 so as to be cited in the report. Symbols M_i, R_i, and H_i used in the following description are similar to those used in the cases of signature creation and citation process. The outside reader device 106 calculates, as to the portions ("companyName", "fiscalYear", and "sales") cited from the original financial reporting data, H_i = h(M_i l l R_i) (i = 1, 2, 3) by means of a cryptographic hash function h(), based on the financial reporting extraction portion 903 and the random number information (rand) described in "sanitizingInfo" of the signature 905. As to the portions ("costSales" and "grossProfit") deleted from the original financial reporting data, the outside reader device 106 reads the hash value (hash) H_i (i = 4, 5) described in "sanitizingInfo" of the signature 905. Next, the outside reader device 106 verifies, with respect to the data obtained by binding H_1... H_5, the signature value by means of a public key of the electronic disclosure device 103, by following the signature verification procedure of the general signature technique (e.g., an RSA signature or a DSA signature) which is used for creating the signature. As regards the public key used in this case, public key certificate data included in the signature 905 may be used if the signature 905 includes the public key certificate data. When the signature 905 includes information capable of identifying the signee, other than the public key certificate data, the signee may be specified based on the information and the public key obtained as to the specified signee may be used. For example, the public key of the signee may be retrieved based on the information identifying the signee through directory service which is provided in advance.

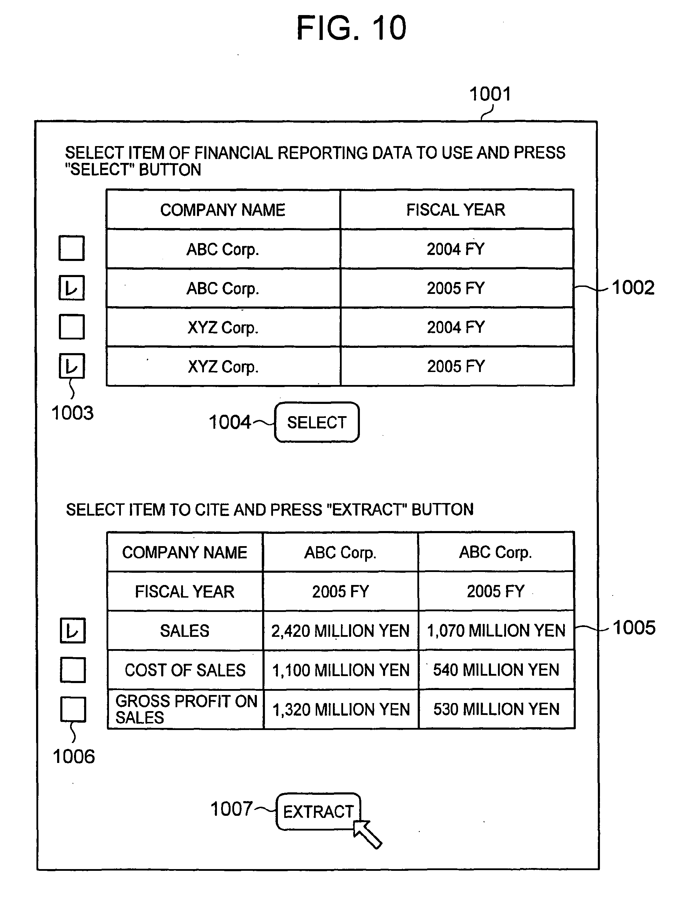

FIG. 10 is a schematic diagram illustrating a screen image of the report creator device 105 when a report is created according to Embodiment 1. FIG. 10 shows, in particular, a screen image for creating the portion corresponding to the table to be cited in the report. A table data creation screen 1001 is displayed on the display device 207 of the report creator device 105. First, a financial reporting data summary 1002 which has already obtained by the report creator device 105 is displayed, and the report creator checks, by using the input device 206 such as a mouse, appropriate financial reporting data selection checkboxes 1003 corresponding to the items to cite in the report. The checkboxes 1003 are provided next to the items of the financial reporting data. When all the necessary items of data have been checked to be selected, the report creator presses a selection button 1004. Then, the content of the financial reporting data thus selected is displayed as a financial reporting data breakdown list 1005, and the report creator checks appropriate financial reporting data item selection checkboxes 1006 corresponding to the items to cite in the report. The checkboxes 1006 are provided next to the items of the data. When all the necessary items have been checked to be selected, the report creator presses an extraction button 1007. According to the description of Embodiment 1, the items of "Company Name" and "Fiscal Year" are not provided with the financial reporting data selection checkbox 1006 because it is regarded that those items should always be extracted to be cited. After the extraction button 1007 is pressed, the extraction process of Steps 602 and 603 is executed, to thereby create, in the report creator device 105, data corresponding to the portion of the table shown in FIG. 9 to be cited in the report.

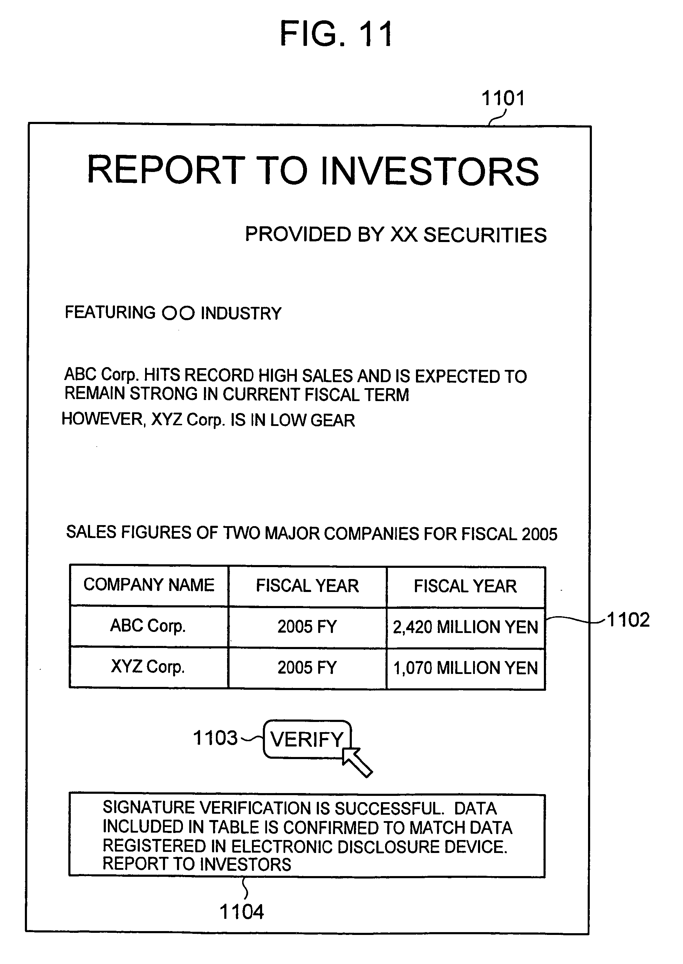

FIG. 11 is a schematic diagram illustrating a screen image when the outside reader device 106 displays the report created according to Embodiment 1. A screen of a report for investors 1101 is displayed on the display device 207 of the outside reader device 106. On the screen of a report for investors 1101, table data 1102 and a verification button 1103 for verification are displayed, in addition to the result of analysis (e.g., business forecasts) made by the report creator (XX securities). Next, the outside reader (investor) presses the verification button 1103 in order to confirm whether the cited table data is correct (whether the cited table data matches the data registered in the electronic disclosure device 103). After the button 1103 is pressed, the process of Step 704 is executed, and the result thereof is displayed on the verification result display screen 1104. In the case where the verification result has turned out to be a success (no falsification has been made), the color or the font style of the numbers contained in the table data 1102 may be changed to blue or to bold, so as to indicate that the data has been verified as being correct. In cases where the verification result has turned out to be a failure (falsification has occurred), the color of the numbers may be changed to red or the numbers are overwritten with a strikethrough so as to indicate that the data may be different from the data registered in the electronic disclosure device 103. In cases of the verification based on the sanitizable signature technique which is used to describe Embodiment 1, the data of ABC Corp. and the data of XYZ Corp. are verified. Accordingly, there may be a case where the verification as to the data of ABC Corp. succeeds while the verification as to the data of XYZ Corp. fails (which is judged to be a verification failure as to the synthesized data as a whole). In this case, it is understood that the data of ABC Corp. matches the data registered in the electronic disclosure device 103, while the data of XYZ Corp. is different from the data registered in the electronic disclosure device 103, and therefore the data of ABC Corp. may be displayed in blue while the data of XYZ Corp. may be displayed in red. An advantage of employing this way of display is that it enables the outside reader to easily understand which part of the data contained in the table may be different from the data registered in the electronic disclosure device 103 (i.e., which part of the data may be falsified).

As has been described in the above, according to Embodiment 1, the electronic disclosure device 103, which has received financial reporting data submitted from the submitter device 102, gives a signature to the financial reporting data according to the sanitizable signature technique and stores the data. The report creator device 105 obtains, from the electronic disclosure device 103, one or more portions available for public inspection, of the financial reporting data given a signature, and creates a report by citing a part of the data or synthesized parts of the data. The outside reader device 106 verifies the signature included in the report obtained from the report creator device 105, to thereby confirm, without making an inquiry to the electronic disclosure device 103, that the data corresponding to the portion cited for inclusion in the report finally configured matches the data stored in the electronic disclosure device 103.

The description of Embodiment 1 has been made on an exemplary case where one electronic disclosure device 103 exists. However, the present invention is also applicable to other cases different from the above where a plurality of the electronic disclosure devices 103 exist. In such cases, the financial reporting data to be synthesized in a report created by the report creator device 105 may include data disclosed by the plurality of electronic disclosure devices 103. For example, financial reporting data submitted by a Japanese company to the electronic disclosure device 103 operated by Japanese public organizations and the like, which discloses the data, may be synthesized with financial reporting data submitted by a U.S. company to another electronic disclosure device 103 operated by U.S. public organizations and the like, and a part of the synthesized data is cited, to thereby create a report in which the data of the Japanese company and the data of the U.S. company are compared with each other.

### Embodiment 2

The description of Embodiment 1 has been made on an exemplary case where the devices are independent of one another. The present invention is similarly applicable to other cases different from the above.

For example, there may be provided an embodiment in which the report creator device 105 matches the submitter device 102. Examples of a situation in which this embodiment works effectively include investor relations (IR) activities in a company. Many companies post their financial reporting data on their websites or the like as part of their investor relations (IR) activities. However, in conventional cases, it is necessary for investors or the like accessing the website to make an inquiry to an electronic disclosure device 103 in order to confirm that the posted data matches the data stored in the electronic disclosure device 103 which is operated by public organizations for widely disclosing the contents reported by each company. According to Embodiment 2, however, the investors or the like can confirm that data posted on a website of a company matches the data stored in the electronic disclosure device 103 by verifying the signature of the electronic disclosure device 103 contained in the data posted on the data on the website of the company.

Further, the investors or the like may create and disclose a report which cites a point of particular note in the financial reporting data of the company, or changes in data values in recent years. According to Embodiment 2, the investors are also capable of confirming that the data cited and synthesized as described above matches the data stored in the electronic disclosure device 103 by verifying the signature of the electronic disclosure device 103 contained in the data posted on the website of the company. Accordingly, Embodiment 2 is effective for companies in terms of improving the quality of investor relation (IR) activities, and also effective for investors by saving them the trouble of having to make an inquiry to the electronic disclosure device 103. Embodiment 2 is also effective for the electronic disclosure device 103 in terms of reducing the processing load thereof due to the reduced number of accesses for confirming data matches.

In each of embodiments described above, a description has been given concerning a disclosure system for financial reporting data, as an example. However, the scope of application of the present invention is not limited to the above, and the present invention is applicable to other disclosure systems. For example, the present invention can be applied to one or more of systems, including a system for disclosing construction application information, a system for disclosing design information of various vehicles, devices, or facilities, a system for disclosing patent application information, a system for disclosing medical information and pharmaceutical information, a system for disclosing damage information in an accident or a disaster, and a system for disclosing evaluation information relating to various contents.

The specification and drawings are, accordingly, to be regarded in an illustrative rather than a restrictive sense. It will, however, be evident that various modifications and changes may be made thereto without departing from the spirit and scope of the invention as set forth in the claims.

## Claims

1. An electronic data disclosure system, comprising:
a submitter device which is operated by a submitter who is submits data;
an electronic disclosure device which discloses data; and
a reader device which is operated by a reader who inspects data,
wherein:
the submitter device is configured to execute the steps of:
creating submission data; and
transmitting the submission data to the electronic disclosure device;
the electronic disclosure device is configured to execute the steps of:
receiving the submission data from the submitter device;
giving a digital signature to the submission data received; and
disclosing the submission data to which the digital signature has been given; and
the reader device is configured to execute the steps of:
obtaining the submission data disclosed by the electronic disclosure device, to which the digital signature has been given;
displaying the submission data to which the digital signature has been given;
performing signature verification of the submission data to which the digital signature is given; and
displaying a result of the signature verification.

2. An electronic data disclosure system according to claim 1, wherein:
the reader device is further configured to execute the step of transmitting, to the electronic disclosure device, a request for inspecting the submission data to which the digital signature has been given;
the electronic disclosure device is further configured to:
prepare data which specifies a portion available to a reader for inspection;
receive the request for inspection from the reader device; and
execute the step of authenticating the reader; and
the step of disclosing data further comprises the steps of:
selecting an item of data from among the submission data, based on data which specifies a portion available to the reader for inspection, and the execution result of the step of authenticating the reader; and
disclosing the item of data selected.

3. An electronic data disclosure system according to claim 2, wherein:
the digital signature given by the electronic disclosure device is a digital signature which has been created according to a sanitizable signature technique;
the electronic disclosure device is further configured to execute the step of calculating, from the digital signature created according to the sanitizable signature technique, a digital signature capable of verifying an item of data selected from among the submission data, based on the data which specifies a portion available to the reader for inspection, and the execution result of the step of authenticating the reader; and
the digital signature given to the submission data which is disclosed in the step of disclosing data is a digital signature capable of verifying the selected item of data.

4. An electronic data disclosure system according to claim 1, further comprising a report creator device which receives, from the electronic disclosure device, the submission data to which the digital signature is given, and creates a report based on the submission data thus received to which the digital signature has been given, wherein:
the digital signature given by the electronic disclosure device is a digital signature created based on the sanitizable signature technique;
the electronic disclosure device is further configured to execute the step of transmitting, to the report creator device, the submission data to which the digital signature has been given; and
the report creator device is configured to execute the steps of:
receiving, from the electronic disclosure device, a plurality of items of submission data to which the digital signature has been given;
creating citation data by synthesizing the plurality of items of data received to which a digital signature has been given and citing a part of the data synthesized, or by citing a part of the plurality of items or submission data received to which a digital signature has been given and synthesizing the cited items of data;
calculating, from the digital signature included in the submission data received to which the digital signature has been given, another electronic signature capable of verifying the citation data created by the step of creating citation data; and
creating a report which includes the citation data and the digital signature capable of verifying the citation data.

5. An electronic data disclosure system according to claim 4, further comprising a report reader device which inspects the report, wherein:
the report creator device is further configured to execute the step of transmitting, to the report reader device, the report created; and
the report reader device is configured to execute the step of:
receiving the report;
displaying the report received;
verifying the citation data included in the report, by using the digital signature capable of verifying the citation data included in the report; and
displaying the verification result of the citation data.
